# EUROPEAN PATENT SPECIFICATION

(11) **EP 4 325 655 B1**
(45) Date of publication and mention of the grant of the patent: **04.02.2026**
(21) Application number: 22904601.6
(22) Date of filing: 05.12.2022
(51) Int. Cl.: H01M 10/613, H01M 10/647, H01M 10/6551, H01M 10/6554, H01M 50/24, H01M 50/691

(54) **BATTERY PACK AND METHOD FOR MANUFACTURING THE SAME**
BATTERIEPACK UND HERSTELLUNGSVERFAHREN DAFÜR
BLOC-BATTERIE ET SON PROCÉDÉ DE FABRICATION

(30) Priority: 08.12.2021 KR 20210175164; 01.12.2022 KR 20220165722
(43) Date of publication of application: 21.02.2024
(73) Proprietor: LG Energy Solution, Ltd., Seoul 07335 (KR)
(72) Inventor: PARK, Jeong Hoon, Daejeon 34122 (KR); CHOI, Jung Woo, Daejeon 34122 (KR)
(74) Representative: Plasseraud IP
(86) International application number: PCT/KR2022/019636
(87) International publication number: WO 2023/106771

(56) References cited:
- CN-U- 211 265 565
- JP-A- 2015 076 402
- JP-A- 2017 107 818
- JP-A- 2020 113 488
- KR-B1- 101 372 436
- KR-B1- 102 082 906
- US-A1- 2019 044 201

## Description

### TECHNICAL FIELD

The present invention relates to a battery pack, in which a drain hole formed in a battery module is prevented from being blocked, and a method for manufacturing the same. US2019/0044201 and CN211265565 relate to battery module assemblies.

### BACKGROUND ART

In general, secondary batteries refer to chargeable and dischargeable batteries, unlike primary batteries that is impossible to charge. Such secondary batteries are widely used in high-tech electronic devices such as phones, notebook computers, and camcorders.

In addition, the secondary batteries may be variously classified according to a structure of an electrode assembly. For example, the secondary batteries may be classified into a stack type structure, a jelly-roll-type structure, and a stack/folding type structure.

Such a secondary battery includes an electrode assembly and a case accommodating the electrode assembly, and the electrode assembly has a structure in which electrodes and separators are alternately stacked.

The secondary battery having a high energy density is used for an electric vehicle (EV) or a hybrid vehicle (HEV) driven by an electric driving source as well as a portable device.

That is, a battery pack in which a plurality of secondary batteries are connected in series or parallel to each other is used for the vehicle, and the battery pack includes a battery module constituted by a plurality of secondary batteries, a plate on which the battery module is disposed, and a heat dissipation body provided between the battery module and the plate.

Here, a drain hole is formed in a bottom surface of the battery module to discharge an electrolyte and moisture, which are generated inside the battery module to the outside.

However, in the battery pack according to the related art, when the battery module is placed on the plate, the heat dissipation body may be introduced into the drain hole formed in the battery module, and thus, the drain hole may be blocked. Accordingly, there is a problem in that the electrolyte and the moisture, which are generated inside the battery module, are not discharged through the drain hole.

### DISCLOSURE OF THE INVENTION

### TECHNICAL PROBLEM

An object of the present invention is to provide a battery pack, which includes a blocking part to prevent a drain hole formed in a battery module from being blocked by a heat dissipation body so that an electrolyte and moisture, which are generated in the battery module, are stably discharged through the drain hole, and a method for manufacturing the same.

### TECHNICAL SOLUTION

A battery pack according to the present invention for solving the above problem includes: a battery module in which a drain hole is formed in a bottom surface thereof and disposed on a top surface of a plate; a heat dissipation body provided between the battery module and the plate; and a blocking part provided between the battery module and the plate to prevent the heat dissipation body from being introduced into the drain hole.

The battery module may include a secondary battery, a module case, in which the secondary battery is accommodated, and a module cover coupled to each of both sides of the module case and electrically connected to the secondary battery, the drain hole may be formed in one end of a bottom surface of a module case to which the module cover is coupled, and the blocking part may be provided in a shape that surrounds a remaining portion except for a portion of the drain hole, which faces the module cover.

The blocking part may be provided to be integrated with the bottom surface of the module case.

The blocking part may be coupled to the bottom surface of the module case.

The blocking part may be coupled to the bottom surface of the module case through an adhesive.

The blocking part may be coupled to an insertion groove formed in the bottom surface of the module case.

The blocking part may be provided to have the same thickness as the heat dissipation body when compressed.

The blocking part may be made of a material capable of absorbing moisture.

The blocking part may be made of a polyurethane material.

An insulator having insulation may be applied to the blocking part.

The insulator may be applied to only a remaining surface except for a surface of the blocking part, which faces the drain hole.

The insulator may be made of polyethylene.

A method for manufacturing a battery pack according to the present invention includes: a battery module manufacturing process of manufacturing a battery module in which a drain hole is formed in a bottom surface thereof; a blocking part providing process of providing a blocking part on the bottom surface of the battery module, in which the drain hole is disposed; a heat dissipation body forming process of pouring a viscous heat dissipation material on a top surface of the plate to form a heat dissipation body; and a battery module coupling process, in which when the battery module is disposed on the top surface of the plate, on which the heat dissipation body is formed, the heat dissipation body is expanded between the battery module and the plate so as to be filled in an empty space between the battery module and the plate, wherein the heat dissipation body is prevented from being introduced into the drain hole by the blocking part.

The battery module manufacturing process may include a process of preparing a secondary battery, a process of coupling a module cover to both sides of the module case in a full-length direction, and a process of accommodating the secondary battery in the module case so as to be electrically connected to the module cover, thereby manufacturing the battery module, the drain hole may be formed in one end of a bottom surface of the module case to which the module cover is coupled, and in the blocking part providing process, the blocking part may be provided on the bottom surface of the module case in a shape that surrounds a remaining portion except for a portion of the drain hole, which faces the module cover.

In the blocking part providing process, the blocking part may be made of a material having restoring force, and in the battery module coupling process, when the battery module is coupled to the top surface of the plate, on which the heat dissipation body is formed, the blocking part may be compressed by coupling force between the battery module and the plate.

In the blocking part providing process, the blocking part may be made of a material capable of absorbing moisture.

The blocking part providing process may further include a process of applying an insulator having insulation on a remaining surface except for a surface of the blocking part, which faces the drain hole.

### ADVANTAGEOUS EFFECTS

The battery pack according to the present invention may include the blocking part to prevent the heat dissipation body from being introduced into the drain hole formed in the battery module, thereby stably discharging the electrolyte and the moisture, which are generated in the battery module.

### BRIEF DESCRIPTION OF THE DRAWINGS

FIG. 1 is a perspective view of a battery back according to a first embodiment of the present invention.
FIG. 2 is an exploded perspective view of the battery pack according to the first embodiment of the present invention.
FIG. 3 is a cross-sectional perspective view illustrating a battery module of the battery pack according to the first embodiment of the present invention.
FIG. 4 is a bottom perspective view illustrating a blocking part of the battery pack according to the first embodiment of the present invention.
FIG. 5 is a bottom view of FIG. 4.
FIG. 6 is a cross-sectional view of the battery pack according to the first embodiment of the present invention.
FIG. 7 is a bottom perspective view of the blocking part to which an insulator is applied according to the first embodiment of the present invention.
FIG. 8 is a cross-sectional view taken along line A-A of FIG. 7.
FIG. 9 is a flowchart illustrating a method for manufacturing a battery pack according to the first embodiment of the present invention.
FIG. 10 is a bottom perspective view of a battery back according to a second embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Battery pack according to first embodiment of the present invention]

A battery pack according to the first embodiment of the present invention has a structure in which a drain hole formed in a battery module is prevented from being blocked by a heat dissipation body, and thus, an electrolyte and moisture, which are generated in the battery module, may be stably discharged through the drain hole.

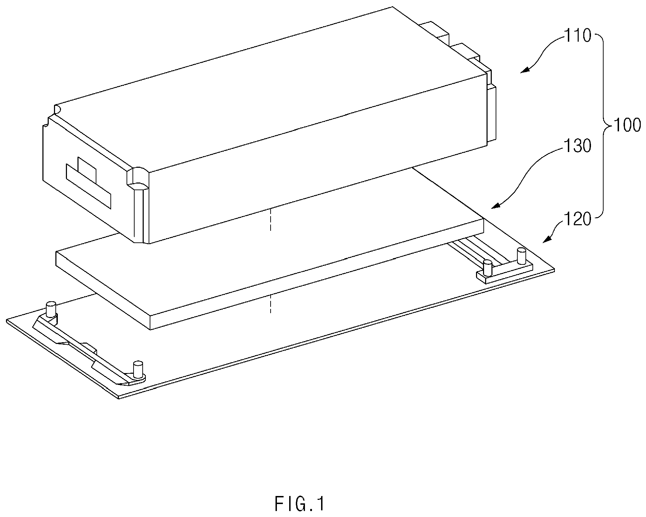

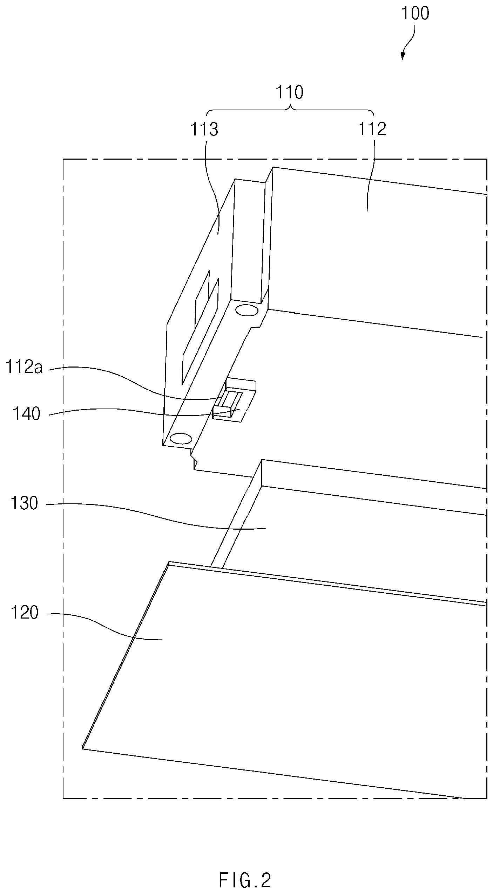

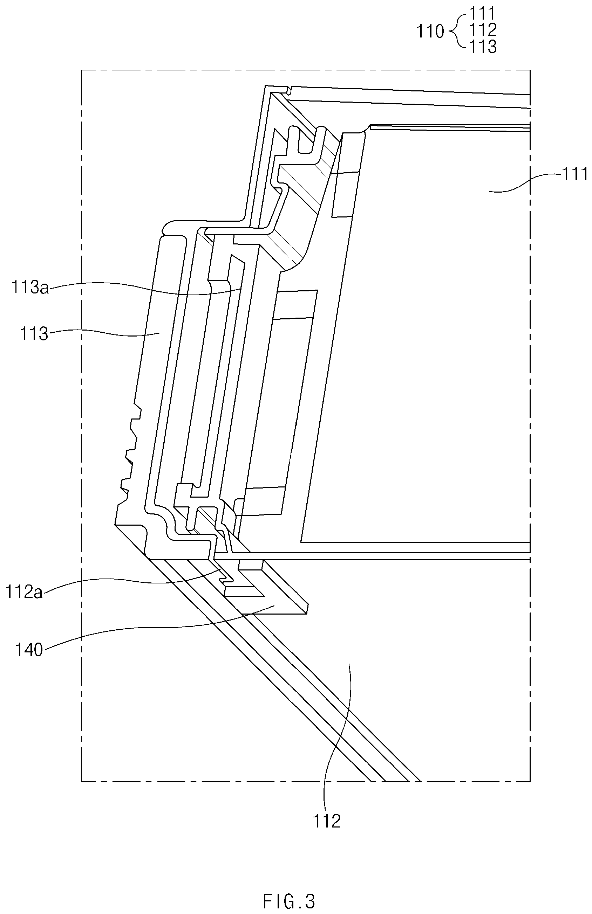

FIG. 1 is a perspective view of a battery back according to a first embodiment of the present invention, FIG. 2 is an exploded perspective view of the battery pack according to the first embodiment of the present invention, and FIG. 3 is a cross-sectional perspective view illustrating a battery module of the battery pack according to the first embodiment of the present invention.

For example, as illustrated in FIGS. 1 to 3, a battery pack 100 according to a first embodiment of the present invention includes a battery module 110, in which a drain hole is formed, a plate on which the battery module 110 is disposed, a heat dissipation body 130 provided between the battery module 110 and the plate 120, and a blocking part 140 that blocks an introduction of the heat dissipation body into a drain hole 112a formed in the battery module 110.

### Battery module

The battery module 110 has a structure in which at least one secondary battery 111 is accommodated, and the drain hole 112a is formed in a bottom surface (a bottom surface of the battery module when viewed in FIG. 2).

That is, referring to FIG. 3, the battery module 110 includes a module case 112 having a structure in which at least one or more secondary batteries 111 are opened in a front and rear direction (left and right direction of the battery module when viewed in FIG. 1), and a module cover 113 coupled to each of front and rear surfaces (left and right surfaces of the module case when viewed in FIG. 1) of the module case 112 and provided with a bus bar 113a electrically connected to the secondary battery 111.

The secondary battery 111 may have a structure in which a plurality of electrodes are alternately stacked in a state in which a separator is interposed therebetween, and the plurality of electrodes may include a positive electrode and a negative electrode. In addition, a positive electrode tab and a positive electrode lead may be connected to the positive electrode, and a negative electrode tab and a negative electrode lead may be connected to the negative electrode.

The secondary battery 111 has a structure in which at least one, preferably two or more positive electrode leads and negative electrode leads are arranged in a state in which the positive electrode lead and the negative electrode lead are directed in a front and rear direction to stand vertically.

The module case 112 has a box shape that is opened in the front and rear direction (left and right direction when viewed in FIG. 1), and at least one or more secondary batteries 111 are accommodated in the module case 112. In addition, the drain hole 112a is formed in one end (a lower end of a left side of the module case in FIG. 2) of the bottom surface of the module case 112 to which the module cover 113 is coupled.

Here, the drain hole 112a serves as a passage through which the electrolyte or moisture generated in the module case 112 is discharged to the outside. Particularly, the drain hole is formed in the one end of the bottom surface of the module case to quickly discharge the moisture.

The module cover 113 is provided with a bus bar 113a that seals the front and rear surfaces of the of the module case 112 while being coupled to the front and rear surfaces of the module case 112 and is electrically connected to the secondary battery 111.

### Plate

The plate 120 is a component for disposing the battery module 110. That is, the plate 120 is made of a metal material in the form of a rectangular plate, and the battery module 110 is disposed on a top surface of the plate 120. Here, the battery module may be coupled to the plate without moving. That is, the plate 120 and the battery module 110 may be coupled to each other through a bolt.

### Heat dissipation body

The heat dissipation body 130 is provided between the battery module and the plate to transfer heat generated from the battery module to the plate. That is, the heat dissipation body 130 is provided as a material for dissipating heat from the battery module 110 disposed on the plate 120. In summary, the heat dissipation body 130 is provided between the battery module 110 and the plate 120 to transfer the heat generated from the battery module 110 to the plate, and then, the plate releases the transferred heat to the outside. Thus, an increase in temperature of the battery module 110 is suppressed.

Here, the heat dissipation body 130 has a property of being stretched by pressing force. That is, when the battery module 110 is coupled to the top surface of the plate 120, the heat dissipation body 130 may be stretched or expanded by coupling force between the battery module 110 and the plate 120, and thus, an empty space between the battery module 110 and the plate 120 may be filled.

The heat dissipation body 130 may be formed while a viscous heat dissipation material is poured onto the plate 120 and then solidified.

For example, the heat dissipation body 130 may be provided using any one of carbon nanofiber, alumina, and graphite.

There is a problem in that when the battery module and the plate are coupled to each other, the heat dissipation body is introduced into the drain hole defined in the battery module to block the drain hole. To prevent this phenomenon, the battery pack 100 according to the first embodiment of the present invention includes a blocking part that blocks the heat dissipation body from being introduced into the drain hole.

Hereinafter, the blocking part will be described in more detail.

### Blocking part

The blocking part 140 is provided between the battery module and the plate and has a structure that blocks the heat dissipation body 130 from being introduced into the drain hole 112a.

That is, the blocking part 140 is provided on the bottom surface of the module case 112 and also is provided to surround a remaining portion except for a portion of the drain hole 112a facing the module cover 113 (a left portion of the drain hole as illustrated in FIG. 2). Thus, the blocking part 140 may block the heat dissipation body 130 to be prevented from being introduced into the drain hole 112a when the battery module 110 and the plate 120 are coupled to each other, and as a result, the drain hole 112a may be prevented from being blocked by the heat dissipation body 130.

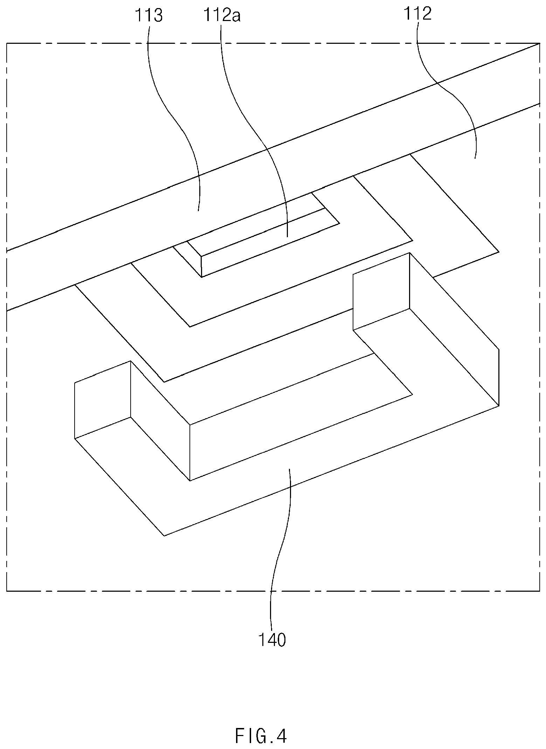

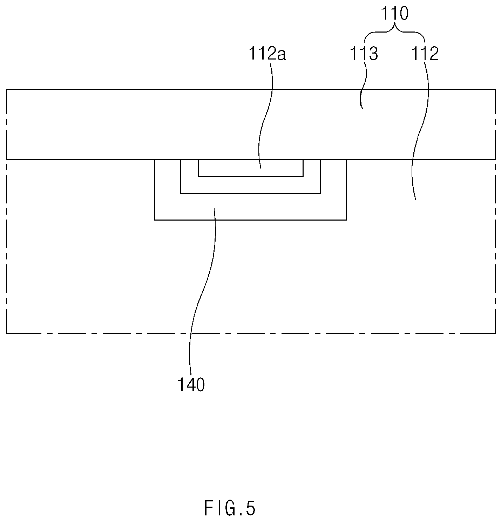

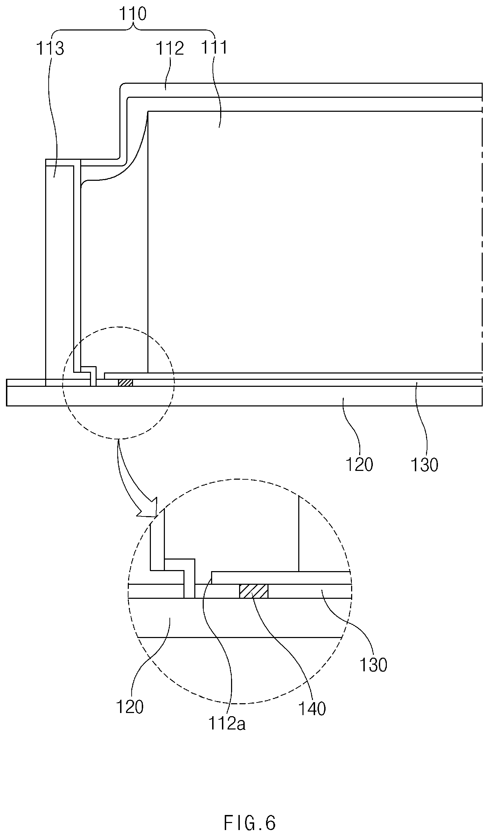

FIG. 4 is a bottom perspective view illustrating the blocking part of the battery pack according to the first embodiment of the present invention, FIG. 5 is a bottom view of FIG. 4, and FIG. 6 is a cross-sectional view of the battery pack according to the first embodiment of the present invention.

For example, referring to FIGS. 4 to 6, the drain hole has a rectangular shape, and the blocking part 140 is provided in a " 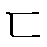 " shape to surround remaining three surfaces except for one surface of the drain hole 112a (left surface of the drain hole when viewed in FIG. 2), which faces the module cover 113. Thus, the blocking part 140 may block the heat dissipation body 130 introduced into the remaining three surfaces of the drain hole 112a to prevent the heat dissipation body 130 from being introduced into the drain hole 112a.

In this embodiment, the " 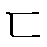 "-shaped blocking part 140 has been described as one embodiment, but the blocking part 140 may have various shapes such as circular, elliptical, L-shaped, and U-shaped.

The blocking part 140 may be made of a material having compression and restoring force in order to minimize a space between the battery module 110 and the plate 120. Particularly, the blocking part 140 may be provided to have the same thickness as the heat dissipation body 130 when compressed. Thus, it is possible to prevent an unnecessary space between the battery module 110 and the plate 120 from being generated by the blocking part 140.

In addition, the blocking part 140 may be made of a material that absorbs the electrolyte and the moisture, which are discharged into the drain hole 112a. Thus, contamination caused by the electrolyte or the moisture discharged into the drain hole 112a may be prevented from occurring.

For example, the blocking part 140 may be made of a polyurethane material. The polyurethane has excellent heat resistance, abrasion resistance, solvent resistance, and chemical resistance, and is also used for a heat insulator and a sound absorbing material.

Referring to FIG. 2, the blocking part 140 may be integrally provided on the bottom surface of the module case. That is, the blocking part 140 may be manufactured together when manufacturing the module case. Thus, coupling between the module case and the blocking part may be improved, and ease of the manufacturing may be improved.

In another embodiment, referring to FIG. 4, the blocking part 140 may be manufactured separately from the module case and then coupled to the bottom surface of the module case. Thus, the blocking part 140 may be replaced depending on whether the blocking part 140 is damaged or contaminated.

The blocking part 140 may be attached to the bottom surface of the battery module 110 through an adhesive. Thus, the blocking part 140 may be easily coupled to the module case, and the movement phenomenon and fixing force may increase.

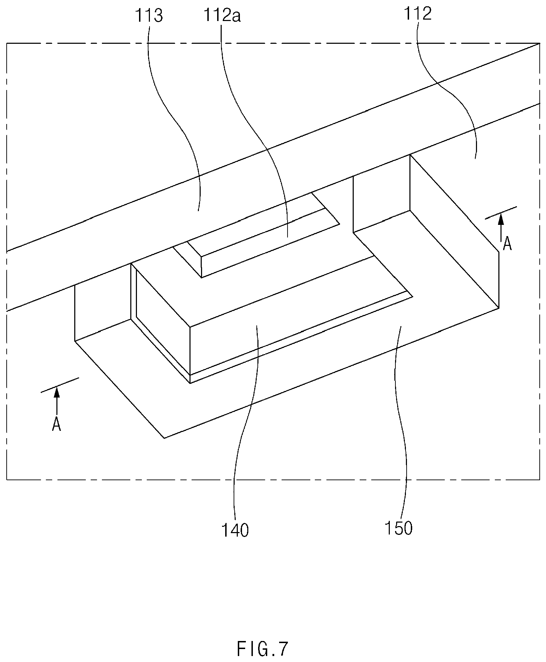

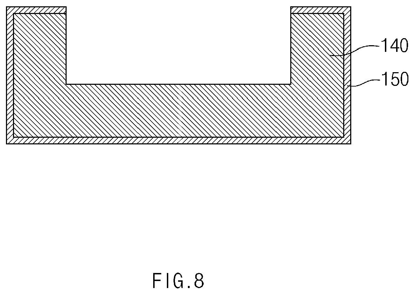

FIG. 7 is a bottom perspective view of the blocking part to which an insulator is applied according to the first embodiment of the present invention, and FIG. 8 is a cross-sectional view taken along line A-A of FIG. 7.

Referring to FIGS. 7 and 8, an insulator 150 having insulating properties for insulating the battery module 110 and the plate 120 from each other may be applied to an outer circumferential surface of the blocking part 140.

Particularly, the insulator 150 may be made of a material having elasticity and may be applied to a remaining surface except for a surface of the blocking part 140, which faces the drain hole 112a. Thus, the blocking part 140 may absorb the electrolyte or the moisture discharged from the drain hole 112a through the surface to which the insulator 150 is not applied, and improve insulation between the battery module 110 and the plate 120 through the insulator 150.

The insulator 150 may be made of polyethylene. The polyethylene is plastic that is harmless to the human body and is widely used as an electrical insulator for household items and toys.

Thus, the battery pack 100 according to the first embodiment of the present invention may include the blocking part 140 to prevent the heat dissipation body 130 from being introduced into the drain hole 112a formed in the battery module 110, and thus, the electrolyte and the moisture, which are generated inside the battery module 110, may be discharged through the drain hole 112a.

Hereinafter, a method for manufacturing the battery pack 100 according to the first embodiment of the present invention will be described.

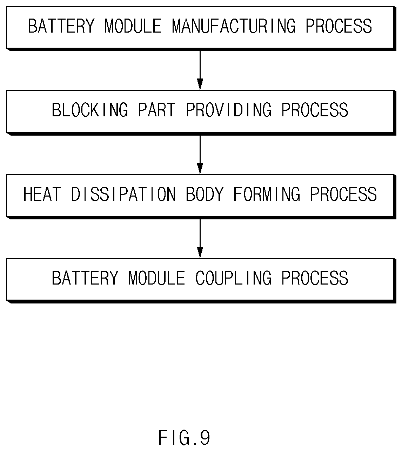

FIG. 9 is a flowchart illustrating a method for manufacturing a battery pack according to the first embodiment of the present invention.

### [Method for manufacturing battery according to first embodiment of the present invention]

As illustrated in FIG. 9, a method for manufacturing a battery according to a first embodiment of the present invention includes a battery module manufacturing process, a blocking part providing process, a heat dissipation body forming process, and a battery module coupling process.

### Battery module manufacturing process

In the battery module manufacturing process, a battery module 110, in which at least one secondary battery 111 is accommodated, and a drain hole 112a is formed in a bottom surface, is manufactured.

The battery module 110 includes at least one secondary battery, a module case 112 which has a structure that is opened in a front and rear direction (left and right direction when viewed in FIG. 1) and in which the secondary battery 111 is accommodated, and a module cover 113 coupled to each of front and rear surfaces (left and right surfaces of the module case when viewed in FIG. 1) of the module case 112 and electrically connected to the secondary battery 111. Here, a drain hole 112a is formed in one end of a bottom surface of the module case 112 (a left lower end of the module case in FIG. 2) to which the module cover 113 is coupled, and the drain hole 112a serves as a passage through which an electrolyte and moisture generated in the module case 112 are discharged.

That is, the battery module manufacturing process includes a process of preparing the secondary battery 111, a process of coupling the module cover 113 to both sides of the module case 112 in a full-length direction, and a process of electrically connecting the secondary battery 11 to the module cover 113 after accommodating the secondary battery 111 in the module case 112 to manufacture the battery module 110.

### Blocking part providing process

In the blocking part providing process, a blocking part 140 having a first thickness is provided on a bottom surface of the battery module 110 disposed outside the drain hole 112a. Particularly, the blocking part 140 may be integrally provided on the bottom surface of the battery module 110 or attached using an adhesive.

For example, the drain hole 112a has a rectangular shape, and the blocking part 140 has a " 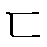 " shape to surround remaining three surfaces except for one surface of the drain hole 112a, which faces the module cover 113. Thus, in the battery module coupling process, the blocking part 140 may effectively block the heat dissipation body 130 introduced into the remaining three surfaces of the drain hole 112a to prevent the heat dissipation body 130 from being introduced into the drain hole 112a.

The blocking part 140 may be made of a material having compression and restoring force and also may be made of a material capable of absorbing moisture. That is, the blocking part 140 may be made of a polyurethane material.

The blocking part providing process may further include an insulator applying process for improving insulation of the blocking part 140, which faces the drain hole 112a. That is, in the blocking part providing process, the insulator having the insulation may be applied to only the remaining surface except for the surface of the blocking part 140, which faces the drain hole 112a.

### Heat dissipation body forming process

In the heat dissipation body forming process, the heat dissipation body 130 is formed by pouring a viscous heat dissipation material on a top surface of the plate 120.

The heat dissipation body 130 may be made of polyethylene.

### Battery module coupling process

In the battery module coupling process, the battery module 110 is coupled to a top surface of the plate 120 on which the heat dissipation body 130 is formed. Then, the heat dissipation body 130 may be expanded between the battery module 110 and the plate 120 by the coupling force between the battery module 110 and the plate 120 and then be filled into an empty space between the battery module 110 and the plate 120. Here, the heat dissipation body 130 extended toward the drain hole 112a may be blocked by the blocking part 140, and thus, the introduction of the heat dissipation body 130 into the drain hole 112a may be prevented.

When the battery module 110 and the plate 120 are coupled to each other in the battery module coupling process, the blocking part 140 may be compressed to a second thickness less than a first thickness, and thus, the battery module 110 and the plate 120 may be prevented from being greatly spaced apart from each other.

The second thickness may have the same as a thickness of the expanded heat dissipation body 130.

When the above processes are completed, the manufacturing of the battery pack is completed.

Hereinafter, in descriptions of another embodiment of the present invention, constituents having the same function as the above-mentioned embodiment have been given the same reference numeral in the drawings, and thus duplicated description will be omitted.

### [Battery pack according to second embodiment of the present invention]

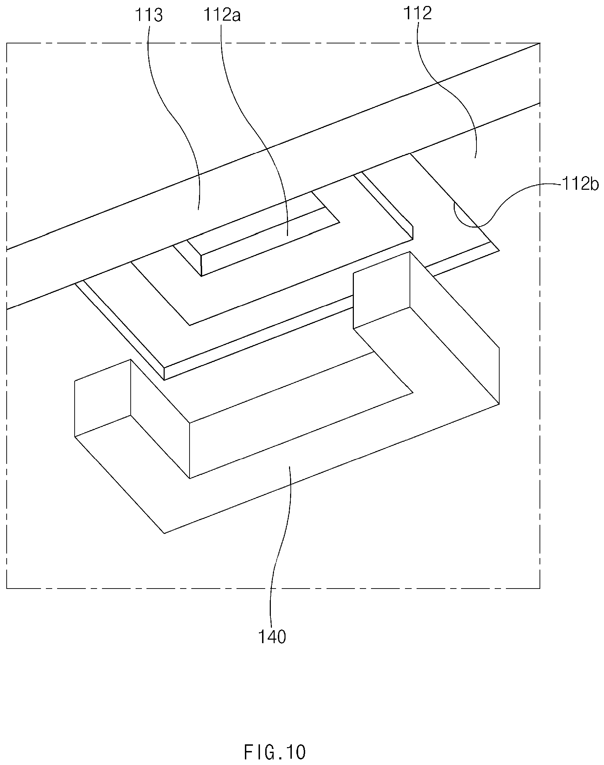

FIG. 10 is a bottom perspective view of a battery back according to a second embodiment of the present invention.

As illustrated in FIG. 10, a battery pack 100 according to a second embodiment of the present invention includes a blocking part 140 provided on a bottom surface of a battery module 110 to prevent the heat dissipation body 130 from being introduced into the drain hole 112a.

Here, an insertion groove 112b into which the blocking part 140 is inserted may be formed in the bottom surface of the battery module 110.

That is, the insertion groove 112b is formed in the bottom surface of the battery module 110, and a portion of the blocking part 140 (an upper end of the blocking part when viewed in FIG. 10) is inserted into the insertion groove 112b. Thus, a coupling position of the blocking part 140 may be easily confirmed, and the blocking part 140 may be prevent from moving. The insertion groove 112b may have the same shape as that of the blocking part 140.

Accordingly, the scope of the present invention is defined by the appended claims. Various modifications made within the claims are to be regarded to be in the scope of the present invention.

### [Description of the Symbols]

100: Battery pack
110: Battery module
111: Secondary battery
112: Module case
112a: Drain hole
112b: Insertion groove
113: Module cover
113a: Bus bar
120: Plate
130: Heat dissipation body
140: Blocking part
150: Insulator

## Claims

1. A battery pack (100) comprising:
a battery module (110) in which a drain hole (112a) is formed in a bottom surface thereof and disposed on a top surface of a plate (120);
a heat dissipation body (130) provided between the battery module (110) and the plate (120); and
a blocking part (140) provided between the battery module (110) and the plate (120) to prevent the heat dissipation body (130) from being introduced into the drain hole (112a).

2. The battery pack (100) of claim 1, wherein the battery module (110) comprises a secondary battery (111), a module case (112), in which the secondary battery is accommodated, and a module cover (113) coupled to each of both sides of the module case (130) and electrically connected to the secondary battery (111),
the drain hole (112a) is formed in one end of a bottom surface of a module case (112) to which the module cover (113) is coupled, and
the blocking part (140) is provided in a shape that surrounds a remaining portion except for a portion of the drain hole (112a), which faces the module cover (113).

3. The battery pack (100) of claim 2, wherein the blocking part (140) is provided to be integrated with the bottom surface of the module case (112).

4. The battery pack (100) of claim 2, wherein the blocking part (140) is coupled to the bottom surface of the module case (112).

5. The battery pack (100) of claim 4, wherein the blocking part (140) is coupled to the bottom surface of the module case (112) through an adhesive.

6. The battery pack (100) of claim 4, wherein the blocking part (140) is coupled to an insertion groove (112b) formed in the bottom surface of the module case (112).

7. The battery pack (100) of claim 1, wherein the blocking part (140) has the same thickness as the heat dissipation body (130) when compressed.

8. The battery pack (100) of claim 1, wherein the blocking part (140) is made of a material capable of absorbing moisture.

9. The battery pack (100) of claim 1, wherein an insulator (150) having insulation is applied to the blocking part (140).

10. The battery pack (100) of claim 9, wherein the insulator (150) is applied to only a remaining surface except for a surface of the blocking part (140), which faces the drain hole (112a).

11. A method for manufacturing a battery pack (100), the method comprising:
a battery module manufacturing process of manufacturing a battery module (110) in which a drain hole (112a) is formed in a bottom surface thereof;
a blocking part providing process of providing a blocking part (140) on the bottom surface of the battery module (110), in which the drain hole is disposed;
a heat dissipation body forming process of pouring a viscous heat dissipation material on a top surface of the plate to form a heat dissipation body (130); and
a battery module coupling process, in which when the battery module (110) is disposed on the top surface of the plate (120), on which the heat dissipation body (130) is formed, the heat dissipation body (130) is expanded between the battery module (110) and the plate (120) so as to be filled in an empty space between the battery module (110) and the plate (120), wherein the heat dissipation body (130) is prevented from being introduced into the drain hole (112a) by the blocking part (140).

12. The method of claim 11, wherein the battery module manufacturing process comprises a process of preparing a secondary battery (111), a process of coupling a module cover (113) to both sides of the module case (112) in a full-length direction, and a process of accommodating the secondary battery (111) in the module case (112) so as to be electrically connected to the module cover (113), thereby manufacturing the battery module (110),
the drain hole (112a) is formed in one end of a bottom surface of the module case (112) to which the module cover (113) is coupled, and
in the blocking part providing process, the blocking part (140) is provided on the bottom surface of the module case in a shape that surrounds a remaining portion except for a portion of the drain hole (112a), which faces the module cover (113).

13. The method of claim 11, wherein, in the blocking part providing process, the blocking part (140) is made of a material having restoring force, and
in the battery module coupling process, when the battery module (110) is coupled to the top surface of the plate (120), on which the heat dissipation body (130) is formed, the blocking part (140) is compressed by coupling force between the battery module (110) and the plate (120).

14. The method of claim 12, wherein, in the blocking part providing process, the blocking part (140) is made of a material capable of absorbing moisture.

15. The method of claim 12, wherein the blocking part providing process further comprises a process of applying an insulator (150) having insulation on a remaining surface except for a surface of the blocking part (140), which faces the drain hole (112a).

## Patentansprüche

1. Batteriepack (100), umfassend:
ein Batteriemodul (110), in welchem ein Ablaufloch (112a) in einer unteren Fläche davon gebildet ist, und an einer oberen Fläche einer Platte (120) angeordnet ist;
einen Wärmeabfuhrkörper (130), welcher zwischen dem Batteriemodul (110) und der Platte (120) bereitgestellt ist; und
einen Blockierungsteil (140), welcher zwischen dem Batteriemodul (110) und der Platte (120) bereitgestellt ist, um den Wärmeabfuhrkörper (130) daran zu hindern, in das Ablaufloch (112a) eingeleitet zu werden.

2. Batteriepack (100), nach Anspruch 1, wobei das Batteriemodul (110) eine Sekundärbatterie (111), ein Modulgehäuse (112), in welches die Sekundärbatterie aufgenommen ist, und eine Modulabdeckung (113) umfasst, welche mit jeder von beiden Seiten des Modulgehäuses (130) gekoppelt ist und mit der Sekundärbatterie (111) elektrisch verbunden ist,
wobei das Ablaufloch (112a) in einem Ende einer unteren Fläche des Modulgehäuses (112) gebildet ist, mit welcher die Modulabdeckung (113) gekoppelt ist, und
der Blockierungsteil (140) in einer Form bereitgestellt ist, welche einen verbleibenden Abschnitt mit Ausnahme eines Abschnitts des Ablauflochs (112a) umgibt, welcher der Modulabdeckung (113) zugewandt ist.

3. Batteriepack (100), nach Anspruch 2, wobei der Blockierungsteil (140) bereitgestellt ist, um mit der unteren Fläche des Modulgehäuses (112) integriert zu sein.

4. Batteriepack (100), nach Anspruch 2, wobei der Blockierungsteil (140) mit der unteren Fläche des Modulgehäuses (112) gekoppelt ist.

5. Batteriepack (100), nach Anspruch 4, wobei der Blockierungsteil (140) mit der unteren Fläche des Modulgehäuses (112) durch ein Haftmittel gekoppelt ist.

6. Batteriepack (100), nach Anspruch 4, wobei der Blockierungsteil (140) mit einer Einführnut (112b) gekoppelt ist, welche in der unteren Fläche des Modulgehäuses (112) gebildet ist.

7. Batteriepack (100), nach Anspruch 1, wobei der Blockierungsteil (140) die gleiche Dicke wie der Wärmeabfuhrkörper (130) aufweist, wenn dieser komprimiert ist.

8. Batteriepack (100), nach Anspruch 1, wobei der Blockierungsteil (140) aus einem Material erzeugt ist, welches in der Lage ist, Feuchtigkeit zu absorbieren.

9. Batteriepack (100), nach Anspruch 1, wobei ein Isolator (150), welcher eine Isolierung aufweist, auf dem Blockierungsteil (140) aufgebracht ist.

10. Batteriepack (100), nach Anspruch 9, wobei der Isolator (150) nur auf eine verbleibende Fläche mit Ausnahme einer Fläche des Blockierungsteils (140) aufgebracht ist, welche dem Ablaufloch (112a) zugewandt ist.

11. Verfahren zum Herstellen eines Batteriepacks (100), wobei das Verfahren umfasst:
einen Batteriemodul-Herstellungsprozess eines Herstellens eines Batteriemoduls (110), in welchem ein Ablaufloch (112a) in einer unteren Fläche davon gebildet wird;
einen Blockierungsteil-Bereitstellungsprozess eines Bereitstellens eines Blockierungsteils (140) an der unteren Fläche des Batteriemoduls (110), in welchem das Ablaufloch angeordnet wird;
einen Wärmeabfuhrkörper-Bildungsprozess eines Gießens eines viskosen Wärmeabfuhrmaterials auf eine obere Fläche der Platte, um einen Wärmeabfuhrkörper (130) zu bilden; und
einen Batteriemodul-Kopplungsprozess, in welchem, wenn das Batteriemodul (110) an der oberen Fläche der Platte (120) angeordnet ist, an welcher der Wärmeabfuhrkörper (130) gebildet ist, der Wärmeabfuhrkörper (130) zwischen dem Batteriemodul (110) und der Platte (120) derart expandiert wird, um in einen leeren Raum zwischen dem Batteriemodul (110) und der Platte (120) gefüllt zu werden, wobei der Wärmeabfuhrkörper (130) durch den Blockierungsteil (140) daran gehindert ist, in das Ablaufloch (112a) eingeleitet zu werden.

12. Verfahren nach Anspruch 11, wobei der Batteriemodul-Herstellungsprozess einen Prozess eines Vorbereitens einer Sekundärbatterie (111), einen Prozess eines Koppelns einer Modulabdeckung (113) mit beiden Seiten des Modulgehäuses (112) in einer Gesamtlängsrichtung und einen Prozess eines Aufnehmens der Sekundärbatterie (111) derart in dem Modulgehäuse (112) umfasst, um elektrisch mit der Modulabdeckung (113) verbunden zu sein, wodurch das Batteriemodul (110) hergestellt wird,
wobei das Ablaufloch (112a) in einem Ende einer unteren Fläche des Modulgehäuses (112) gebildet wird, mit welcher die Modulabdeckung (113) gekoppelt ist, und
in dem Blockierungsteil-Bereitstellungsprozess der Blockierungsteil (140) an der unteren Fläche des Modulgehäuses in einer Form bereitgestellt wird, welche einen verbleibenden Abschnitt mit Ausnahme eines Abschnitts des Ablauflochs (112a) umgibt, welcher der Modulabdeckung (113) zugewandt ist.

13. Verfahren nach Anspruch 11, wobei in dem Blockierungsteil-Bereitstellungsprozess der Blockierungsteil (140) aus einem Material erzeugt ist, welches eine Rückstellkraft aufweist, und
in dem Batteriemodul-Kopplungsprozess, wenn das Batteriemodul (110) mit der oberen Fläche der Platte (120) gekoppelt wird, an welcher der Wärmeabfuhrkörper (130) ausgebildet wird, der Blockierungsteil (140) durch eine Kopplungskraft zwischen dem Batteriemodul (110) und der Platte (120) komprimiert wird.

14. Verfahren nach Anspruch 12, wobei in dem Blockierungsteil-Bereitstellungsprozess der Blockierungsteil (140) aus einem Material erzeugt wird, welches in der Lage ist, Feuchtigkeit zu absorbieren.

15. Verfahren nach Anspruch 12, wobei der Blockierungsteil-Bereitstellungsprozess ferner einen Prozess eines Aufbringens eines Isolators (150), welcher eine Isolierung aufweist, auf einer verbleibenden Fläche mit Ausnahme einer Fläche des Blockierungsteils (140) umfasst, welche dem Ablaufloch (112a) zugewandt ist.

## Revendications

1. Bloc-batterie (100) comprenant :
un module de batterie (110) dans lequel un orifice d'évacuation (112a) est formé dans une surface inférieure de celui-ci et disposé sur une surface supérieure d'une plaque (120) ;
un corps de dissipation de chaleur (130) fourni entre le module de batterie (110) et la plaque (120) ; et
une partie de blocage (140) fournie entre le module de batterie (110) et la plaque (120) pour empêcher l'introduction du corps de dissipation de chaleur (130) dans l'orifice d'évacuation (112a).

2. Bloc-batterie (100) selon la revendication 1, dans lequel le module de batterie (110) comprend une batterie secondaire (111), un boîtier de module (112) dans lequel la batterie secondaire est logée, et un couvercle de module (113) couplé à chacun des deux côtés du boîtier de module (130) et connecté électriquement à la batterie secondaire (111),
l'orifice d'évacuation (112a) est formé dans une extrémité d'une surface inférieure d'un boîtier de module (112) auquel le couvercle de module (113) est couplé, et
la partie de blocage (140) est fournie dans une forme qui entoure une partie restante à l'exception d'une partie de l'orifice d'évacuation (112a) qui fait face au couvercle de module (113).

3. Bloc-batterie (100) selon la revendication 2, dans lequel la partie de blocage (140) est fournie pour être intégrée à la surface inférieure du boîtier de module (112).

4. Bloc-batterie (100) selon la revendication 2, dans lequel la partie de blocage (140) est couplée à la surface inférieure du boîtier de module (112).

5. Bloc-batterie (100) selon la revendication 4, dans lequel la partie de blocage (140) est couplée à la surface inférieure du boîtier de module (112) par un adhésif.

6. Bloc-batterie (100) selon la revendication 4, dans lequel la partie de blocage (140) est couplée à une rainure d'insertion (112b) formée dans la surface inférieure du boîtier de module (112).

7. Bloc-batterie (100) selon la revendication 1, dans lequel la partie de blocage (140) a la même épaisseur que le corps de dissipation de chaleur (130) lorsqu'elle est comprimée.

8. Bloc-batterie (100) selon la revendication 1, dans lequel la partie de blocage (140) est constituée d'un matériau capable d'absorber l'humidité.

9. Bloc-batterie (100) selon la revendication 1, dans lequel un isolant (150) permettant une isolation est appliqué sur la partie de blocage (140).

10. Bloc-batterie (100) selon la revendication 9, dans lequel l'isolant (150) est appliqué uniquement sur une surface restante à l'exception d'une surface de la partie de blocage (140), qui fait face à l'orifice d'évacuation (112a).

11. Procédé de fabrication d'un bloc-batterie (100), le procédé comprenant :
un processus de fabrication de module de batterie consistant à fabriquer un module de batterie (110) dans lequel un orifice d'évacuation (112a) est formé dans une surface inférieure de celui-ci ;
un processus de fourniture de partie de blocage consistant à fournir une partie de blocage (140) sur la surface inférieure du module de batterie (110), où l'orifice d'évacuation est disposé ;
un processus de formation de corps de dissipation de chaleur consistant à verser un matériau de dissipation de chaleur visqueux sur une surface supérieure de la plaque pour former un corps de dissipation de chaleur (130) ; et
un processus de couplage de module de batterie, dans lequel, lorsque le module de batterie (110) est disposé sur la surface supérieure de la plaque (120), sur laquelle est formé le corps de dissipation de chaleur (130), le corps de dissipation de chaleur (130) se dilate entre le module de batterie (110) et la plaque (120) de façon à remplir un espace vide entre le module de batterie (110) et la plaque (120), dans lequel l'introduction du corps de dissipation de chaleur (130) dans l'orifice d'évacuation (112a) par la partie de blocage (140) est empêchée.

12. Procédé selon la revendication 11, dans lequel le processus de fabrication de module de batterie comprend un processus de préparation d'une batterie secondaire (111), un processus de couplage d'un couvercle de module (113) de chaque côté du boîtier de module (112) dans une direction de pleine longueur, et un processus de logement de la batterie secondaire (111) dans le boîtier de module (112) de façon à ce qu'elle soit connectée électriquement au couvercle de module (113), ce qui permet de fabriquer le module de batterie (110),
l'orifice d'évacuation (112a) est formé dans une extrémité d'une surface inférieure du boîtier de module (112) auquel le couvercle de module (113) est couplé, et
dans le processus de fourniture de partie de blocage, la partie de blocage (140) est disposée sur la surface inférieure du boîtier de module dans une forme qui entoure une partie restante à l'exception d'une partie de l'orifice d'évacuation (112a), qui fait face au couvercle de module (113).

13. Procédé selon la revendication 11, dans lequel, dans le processus de fourniture de partie de blocage, la partie de blocage (140) est constituée d'un matériau ayant une force de rappel, et
dans le processus de couplage de module de batterie, lorsque le module de batterie (110) est couplé à la surface supérieure de la plaque (120), sur laquelle est formé le corps de dissipation de chaleur (130), la partie de blocage (140) est comprimée par une force de couplage entre le module de batterie (110) et la plaque (120).

14. Procédé selon la revendication 12, dans lequel, dans le processus de fourniture de partie de blocage, la partie de blocage (140) est constituée d'un matériau capable d'absorber l'humidité.

15. Procédé selon la revendication 12, dans lequel le processus de fourniture de partie de blocage comprend en outre un processus consistant à appliquer un isolant (150) permettant une isolation sur une surface restante à l'exception d'une surface de la partie de blocage (140), qui fait face à l'orifice d'évacuation (112a).
